# EUROPÄISCHE PATENTSCHRIFT

(11) **EP 1 306 272 B1**
(45) Veröffentlichungstag und Bekanntmachung des Hinweises auf die Patenterteilung: **22.11.2006**
(21) Anmeldenummer: 02023667.5
(22) Anmeldetag: 22.10.2002
(51) Int. Cl.: B60R 21/20

(54) **Baugruppe mit Gassack-Modul**
Assembly comprising airbag
Ensemble avec coussin gonflable

(30) Priorität: 23.10.2001 DE 20117140 U
(43) Veröffentlichungstag der Anmeldung: 02.05.2003
(73) Patentinhaber: TRW Automotive Safety Systems GmbH, 63743 Aschaffenburg (DE)
(72) Erfinder: Derrick, John-Oliver, 97265 Hettstadt (DE); Schumacher, Volker, 66839 Schmelz (DE)
(74) Vertreter: Kitzhofer, Thomas

(56) Entgegenhaltungen:
- EP-A- 0 558 866
- DE-U- 20 017 527
- DE-U- 20 021 532
- FR-A- 2 790 044
- US-A- 5 584 501
- US-A1- 2001 011 815

## Beschreibung

Die Erfindung betrifft eine Baugruppe nach dem Oberbegriff des Anspruchs 1.

Bei bisherigen Baugruppen, die ein Gassack-Modul haben, welches über eine Rastvorrichtung am fahrzeugseitigen Teil, zum Beispiel dem Lenkrad befestigt wird, ist das Verriegelungselement in Richtung der verriegelten Stellung vorgespannt, indem entweder das Verriegelungselement selbst eine Feder ist oder von einem elastischen Element in die verriegelte Stellung gedrückt wird. Zur Demontage muß ein Werkzeug eingeführt werden, das das Verriegelungselement in die Freigabestellung zurückdrückt.

Aus der EP-A-0 558 866 ist weiterhin eine Befestigungsvorrichtung zur lösbaren Befestigung zweier Bauteile bekannt, wobei die Vorrichtung zur Rastverbindung zwischen einem zapfenförmigen Element und einer Platte mit Bohrung dient und der Zapfen durch die Bohrung gesteckt wird und in dieser einrastet. Der Zapfen besitzt hierzu kugelförmige Rastelemente, die im eingerasteten Zustand seitlich aus dem Zapfen herausragen und ein Herausbewegen des Zapfens aus der Bohrung in der einen Richtung verhindern. Ein entsprechend geformter Stift, der in einer Längsbohrung im Inneren des Zapfens geführt ist und durch eine am Bohrgrund angeordnete Feder kraftbeaufschlagt wird, legt die möglichen Positionen der Rastelemente fest. Zum Lösen der Rastverbindung wird der Stift von der offenen Stirnseite des Zapfens in eine Richtung entgegen der Federkraft gedrückt, wodurch die Rastelemente sich in Richtung zur Zapfenlängsachse verlagern und die Rastverbindung folglich gelöst wird.

US 2002/0011815 A1 offenbart eine Befestigungsvorrichtung zur lösbaren Befestigung eines Gassack-Moduls auf einem Lenkrad mit den Merkmalen des Oberbegriffs des unabhängigen Anspruchs 1.

Die Erfindung schafft eine Baugruppe, bei der die Demontage einfacher ist. Dies wird durch eine Baugruppe nach Anspruch 1 erreicht. Das Verriegelungselement ist in der verriegelten Stellung in Richtung einer Freigabestellung, aus der Ausnehmung heraus, vorgespannt. Das kann beispielsweise dadurch ermöglicht werden, daß das Verriegelungselement selbst einen elastischen Abschnitt hat, mit dem es sich aus der Verriegelungsstellung herausbewegen will oder indem ein anderes elastisches Element vorgesehen ist, das auf das Verriegelungselement drückt und bestrebt ist, es in die Freigabestellung für den Zapfen zu bewegen. Bislang wurde die Verschiebebewegung des Verriegelungselements ausschließlich vom Werkzeug durchgeführt, bei der erfindungsgemäßen Baugruppe wird die Entriegelung durch die Vorspannung zumindest unterstützt.

Damit das Verriegelungselement in der verriegelten Stellung nicht durch die auf es ausgeübte Vorspannkraft in die Freigabestellung bewegt wird, ist vorzugsweise eine seitliche Begrenzung für das Verriegelungselement vorgesehen, die in der verriegelten Stellung wirkt und die eine Verschiebung des Verriegelungselements in der verriegelten Stellung in Richtung der Freigabestellung verhindert. Diese seitliche Begrenzung ist vorzugsweise durch eine Wandung einer Öffnung gebildet, wobei der Zapfen in die Öffnung eingeführt wird und wobei sich die Öffnung so aufweitet, daß bei einer bestimmten Verschiebung des Zapfens und des Verriegelungselements eine Verschiebung des Verriegelungselements durch die vorgesehene Vorspannkraft in die Freigabestellung für den Zapfen erfolgen kann.

Die Öffnung verjüngt sich konisch, wie gemäß einer Ausführungsform vorgesehen ist.

Darüber hinaus kann ein zusätzliches elastisches Mittel vorgesehen sein, das in der verriegelten Stellung eine Kraft auf das Verriegelungselement ausübt, die größer als die Vorspannkraft, die in Freigaberichtung wirkt, ist und die entgegen derselben wirkt. Das elastische Mittel ist vorzugsweise eine Feder.

Zur Demontage sieht die Erfindung gemäß einer Ausführungsform vor, daß ein Anlageteil an dem elastischen Mittel, das entgegen der Freigaberichtung wirkt, angreift. Das Anlageteil ist entfernbar in der Baugruppe untergebracht, und nach seiner Entfernung ist die vom elastischen Mittel auf das Verriegelungselement ausgeübte Kraft in Richtung zur verriegelten Stellung geringer als die Vorspannkraft in Freigabestellung, so daß das Verriegelungselement ohne Zuhilfenahme eines Werkzeugs in die Freigabestellung wandert.

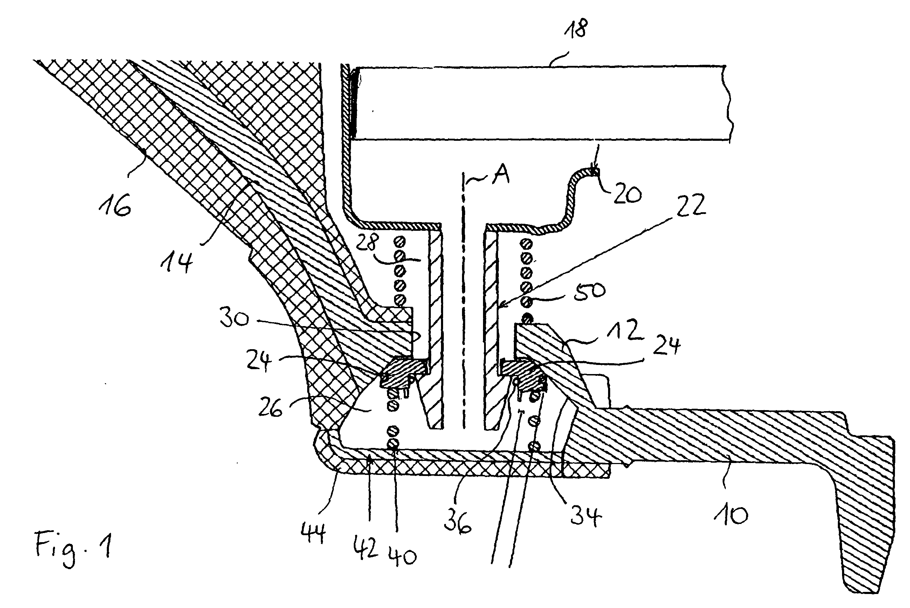

Weitere Merkmale und Vorteile der Erfindung ergeben sich aus der nachfolgenden Beschreibung einer bevorzugten Ausführungsform. Figur 1 zeigt in diesem Zusammenhang eine Querschnittsansicht durch eine erfindungsgemäße Baugruppe mit einem Gassack-Modul und einem Lenkrad, wobei der in Figur 1 dargestellte Schnitt längs der Speichen und der Lenkradnabe verläuft.

In Figur 1 ist eine Hälfte einer Lenkradnabe 10 dargestellt, die Teil des Lenkradskelettes ist und im Bereich eines Absatzes 12 in Speichen 14 übergeht. Mit 16 ist die Umschäumung des Lenkradskelettes bezeichnet. Der bisher beschriebene Bereich wird als Lenkrad betitelt. Ein Gassack-Modul ist als sogenanntes "floating-horn"-Modul am Lenkrad befestigt. Das Gassack-Modul hat ein Gehäuse 18, in dem ein Gassack mit einem Gasgenerator untergebracht sind. Das Gehäuse 18 ist an einem Gasgeneratorträger 20 befestigt, an dessen Rückseite eine geschlitzte Buchse, im folgenden Zapfen 22 genannt, befestigt ist. Insgesamt sind mehrere solcher Zapfen 22 vorgesehen, mit denen das Gassack-Modul am Lenkrad befestigt ist.

Die Zapfen 22 sind Teil einer Rastvorrichtung, mittels denen das Gassack-Modul am Lenkrad, welches ein fahrzeugseitiges Teil bildet, befestigt ist. Zu der Rastvorrichtung gehören zwei kreissegment- und backenförmige Verriegelungselemente 24, welche in einem Hohlraum 26 unter dem Absatz 12 untergebracht sind. Die beiden jeweils halbkreisförmigen Verriegelungselemente liegen in der in Figur 1 dargestellten verriegelten Stellung aneinander an, so daß sie nicht weiter radial aufeinander zu bewegt werden können. Jeder Zapfen 22 hat eine Ausnehmung 28 in Form einer Hinterschneidung, in die die Verriegelungselemente 24 einrasten, sobald das Modul von oben, in Richtung der Zapfenlängsachse A, in die Öffnung 30 des Skeletts eingeführt wird. Die Verriegelungselemente 24 sind radial, das heißt rechtwinkelig zur Achse A, aufeinander zu in die verriegelte Stellung und voneinander weg in die Freigabestellung verschiebbar.

Die Öffnung 30 erweitert sich nach unten zur Schaffung des Hohlraums 26. Die nach oben konisch zulaufende Wand ist mit 34 bezeichnet. Die beiden Verriegelungselemente 24 haben eine entsprechende konische Gegenfläche, so daß sie an der konischen Wand 34 entlanggleiten können. Wenn die Bewegung nach oben erfolgt, wandern die Verriegelungselemente radial aufeinander zu und umgekehrt.

Die beiden Verriegelungselemente 24 werden durch eine Freigabefeder 36 verbunden, die bestrebt ist, die Verriegelungselemente radial nach außen voneinander und vom Zapfen 22 weg zu drücken, so daß sie in die Freigabestellung gelangen, in der der Zapfen 22 nach oben aus der Öffnung 30 herausgezogen werden kann. Die Freigabefeder 36 übt in der in Figur 1 dargestellten verriegelten Stellung eine radial nach außen gerichtete Vorspannkraft auf die Verriegelungselemente 24 aus.

In der verriegelten Stellung und im Betrieb der Baugruppe können sich die Verriegelungselemente 24 jedoch nicht radial voneinander weg in die Freigabestellung bewegen, denn ein weiteres elastisches Mittel in Form einer Sperrfeder 40 greift an der Unterseite der Verriegelungselemente 24 an und drückt diese tiefer in den Konus und damit aufeinander zu, bis sich die Verriegelungelemente berühren. Die dabei über die Wand 34, die als seitliche Begrenzung wirkt, auf die Verriegelungselemente 24 ausgeübte radial einwärts gerichtete Kraft, die entgegen der Freigabestellung wirkt, ist größer als die Vorspannkraft, die in Gegenrichtung von der Freigabefeder 36 ausgeübt wird.

Die Sperrfeder 40 liegt auf einem dicken Anlageteil 42, das am Boden des Hohlraums 26 liegt, auf, um sich daran abzustützen. Eine schwenkbare Klappe 44 wiederum bildet den Boden des Hohlraums 26. Wird das Anlageteil 42 entfernt, zum Beispiel nach Öffnen der Klappe 44, ist die von der Sperrfeder 40 ausgeübte Kraft auf die Verriegelungselemente 24 kleiner als die durch die Freigabefeder 36 ausgeübte Vorspannkraft. Das Modul muß dann nur etwas nach unten gedrückt werden, und die Verriegelungselemente 24 wandern von selbst in die Freigabestellung auseinander, so daß das Modul nach oben, ohne daß ein Werkzeug verwendet wird, herausgenommen werden kann. Alternativ kann die Klappe 44 auch weggelassen werden, so daß zum Beispiel die Umschäumung 16 auch einstückig in den Boden des Hohlraums 26 übergeht. Das Anlageteil 42 kann in diesem Fall beispielsweise aus der Zeichenebene herausgezogen werden, so daß die Vorspannkraft der Sperrfeder 40 geringer ist oder die Abstützung der Sperrfeder 40 ganz wegfällt.

Die Verriegelungselemente 24 bilden auch eine Art Gleitlagerung für die Zapfen 22. Über die konische Wand 34 ergibt sich immer eine spielfreie Zentrierung zwischen dem Lager, hier den Verriegelungselementen 24, und dem Lenkradskelett. Zwischen den Zapfen 22 und ihren Lagern, also den Verriegelungselementen 24, muß nur ein geringer radialer Spalt vorgesehen sein, der ausreicht, um eine Axialverschiebung des Lenkradmoduls zu erlauben.

Diese Axialverschiebung erfolgt beim Hupen. Hierzu wird das gesamte Gassack-Modul in Achsrichtung, bezogen auf Figur 1 nach unten, gegen eine sogenannte Rückstellfeder 50 zwischen Skelett und Trägerblech 20 gedrückt, bis Hupenkontakte einander berühren. Die Rückstellfeder 50 drückt nach Loslassen des Moduls dieses wieder in die Ausgangsstellung zurück.

Die Ausrichtung des Moduls zum Lenkrad wird dadurch auch erleichtert, daß die Zapfen 22 in eine jeweilige Öffnung 30 direkt im Skelett eingreifen und nicht, wie teilweise im Stand der Technik üblich, in Zwischenbleche, die indirekt am Skelett montiert sind.

## Patentansprüche

1. Baugruppe, umfassend:
ein Gassack-Modul,
ein fahrzeugseitiges Teil, insbesondere ein Lenkrad, und
eine lösbare Rastverbindung zur Befestigung des Gassack-Moduls am fahrzeugseitigen Teil,
wobei die Rastvorrichtung einen mit einer Ausnehmung (28) versehenen Zapfen (22) und ein quer, vorzugsweise senkrecht, zur Zapfenlängsachse (A) verschiebbares Verriegelungselement (24) aufweist, das beim Einrasten in Richtung zur Zapfenlängsachse (A) in die Ausnehmung (28) radial verschoben wird,
**dadurch gekennzeichnet, daß**
das Verriegelungselement (24) in der verriegelten Stellung in Richtung einer Freigabestellung, aus der Ausnehmung (28) heraus, vorgespannt ist.

2. Baugruppe nach Anspruch 1, **dadurch gekennzeichnet, daß** eine Freigabefeder (36) bestrebt ist, das Verriegelungslement (24) radial nach außen zu bewegen.

3. Baugruppe nach Anspruch 1 oder 2, **dadurch gekennzeichnet, daß** das fahrzeugseitige Teil eine seitliche Begrenzung für das Verriegelungselement (24) hat, welches eine Verschiebung des Verriegelungselements (24) in der verriegelten Stellung in Richtung zur Freigabestellung verhindert.

4. Baugruppe nach Anspruch 3, **dadurch gekennzeichnet, daß** die seitliche Begrenzung eine Wand (34) einer Öffnung ist, in die der Zapfen (22) eingeführt wird, wobei sich die Öffnung (30) radial so aufweitet, daß bei einer bestimmten Verschiebung des Zapfens (22) und des Verriegelungselements (24) eine Verschiebung des Verriegelungselements (24) durch die vorgesehene Vorspannkraft in Richtung zur Freigabestellung erfolgt.

5. Baugruppe nach Anspruch 4, **dadurch gekennzeichnet, daß** die Öffnung (30) wenigstens abschnittsweise konisch ist.

6. Baugruppe nach Anspruch 5, **dadurch gekennzeichnet, daß** das Verriegelungselement eine Gegenkonusfläche aufweist, mit der es an der Wand (34) der Öffnung (30) im Bereich des Konus anliegt.

7. Baugruppe nach Anspruch 5 oder 6, **dadurch gekennzeichnet, daß** mehrere Verriegelungselemente, die jeweils kreissegmentförmig ausgebildet sind, zur Verriegelung eines Zapfens (22) vorgesehen sind, wobei die Verriegelungselemente durch eine die Vorspannkraft herbeiführende Freigabefeder (36) in Freigaberichtung radial vorgespannt sind.

8. Baugruppe nach einem der vorhergehenden Ansprüche, **dadurch gekennzeichnet, daß** ein elastisches Mittel (40) vorgesehen ist, das in der verriegelten Stellung eine Kraft auf das Verriegelungselement (24) ausübt, die größer als die Vorspannkraft in Freigaberichtung ist und die entgegen derselben wirkt.

9. Baugruppe nach Anspruch 5 oder 6 und zusätzlich nach Anspruch 8, **dadurch gekennzeichnet, daß** das elastische Mittel (40) bestrebt ist, das Verriegelungselement tiefer in den enger werdenden Abschnitt der Öffnung (30) einzuschieben.

10. Baugruppe nach Anspruch 8 oder 9, **dadurch gekennzeichnet, daß** ein Anlageteil (42), an dem das elastische Mittel (40) angreift, entfernbar in der Baugruppe untergebracht ist, und wobei nach Entfernung des Anlageteils (42) die von dem elastischen Mittel (40) auf das Verriegelungselement (24) ausgeübte Kraft in Richtung zur verriegelten Stellung geringer als die Vorspannkraft in Richtung Freigabestellung ist.

## Claims

1. An assembly unit comprising:
an airbag module,
a part of a vehicle, especially a steering wheel, and
a releasable latching connection for attaching the airbag module to the part of the vehicle,
the latching device having a journal (22) provided with a recess (28) and a locking element (24) that can be displaced crosswise, preferably perpendicularly, to the longitudinal axis (A) of the journal and that is radially displaced in the direction of the longitudinal axis (A) of the journal when it latches into the recess (28),
**characterized in that**
in the locked position, the locking element (24) is prestressed towards a release position, out of the recess (28).

2. The assembly unit according to Claim 1, **characterized in that** a release spring (36) strives to move the locking element (24) radially outwards.

3. The assembly unit according to Claim 1 or 2, **characterized in that** the vehicle part has a lateral delimitation for the locking element (24), which prevents a displacement of the locking element (24) in the locked position towards the release position.

4. The assembly unit according to Claim 3, **characterized in that** the lateral delimitation is a wall (34) of an opening into which the journal (22) is inserted, the opening (30) widening radially in such a way that, after a specific displacement of the journal (22) and of the locking element (24), the locking element (24) is displaced towards the release position by the available prestressing force.

5. The assembly unit according to Claim 4, **characterized in that** the opening (30) is conical at least in sections.

6. The assembly unit according to Claim 5, **characterized in that** the locking element has a mating cone surface by which it lies against the wall (34) of the opening (30) in the area of the cone.

7. The assembly unit according to Claim 5 or 6, **characterized in that** several locking elements, which are each formed in the shape of a circular segment, are provided for locking a journal (22), the locking elements being prestressed radially in the release direction by a release spring (36) that generates the prestressing force.

8. The assembly unit according to any of the preceding claims, **characterized in that** an elastic means (40) is provided that, in the locked position, exerts a force on the locking element (24) that is greater than the prestressing force acting in the release direction and that counteracts the latter.

9. The assembly unit according to Claim 5 or 6 and additionally according to Claim 8, **characterized in that** the elastic means (40) strives to push the locking element deeper into the narrowing section of the opening (30).

10. The assembly unit according to Claim 8 or 9, **characterized in that** a contact part (42) that is engaged by the elastic means (40) is removably accommodated in the assembly unit and, after the contact part (42) has been removed, the force exerted by the elastic means (40) on the locking element (24) in the direction towards the locked position is smaller than the prestressing force in the direction towards the release position.

## Revendications

1. Ensemble comprenant :
un module de coussin à gaz,
une partie côté véhicule, en particulier un volant de direction, et
une liaison par enclenchement détachable pour fixer le module de coussin à gaz à la partie côté véhicule,
le dispositif d'enclenchement présentant un tenon (22) pourvu d'un évidement (28) et un élément de verrouillage (24) déplaçable transversalement, de préférence perpendiculairement à l'axe longitudinal (A) du tenon, élément de verrouillage qui est déplacé radialement dans l'évidement (28) lors de l'enclenchement en direction de l'axe longitudinal (A) du tenon,
**caractérisé en ce que**
dans la position verrouillée, l'élément de verrouillage (24) est précontraint en direction d'une position de dégagement hors de l'évidement (28).

2. Ensemble selon la revendication 1, **caractérisé en ce qu'**un ressort de dégagement (36) tend à déplacer l'élément de verrouillage (24) radialement vers l'extérieur.

3. Ensemble selon la revendication 1 ou 2, **caractérisé en ce que** la partie côté véhicule a une délimitation latérale pour l'élément de verrouillage (24), qui empêche un déplacement de l'élément de verrouillage (24) dans la position verrouillée en direction de la position de dégagement.

4. Ensemble selon la revendication 3, **caractérisé en ce que** la délimitation latérale est une paroi (34) d'une ouverture dans laquelle est introduit le tenon (22), l'ouverture (30) s'évasant radialement de telle sorte que lors d'un déplacement déterminé du tenon (22) et de l'élément de verrouillage (24), un déplacement de l'élément de verrouillage (24) est produit par la force de précontrainte en direction de la position de dégagement.

5. Ensemble selon la revendication 4, **caractérisé en ce que** l'ouverture (30) est conique au moins par tronçons.

6. Ensemble selon la revendication 5, **caractérisé en ce que** l'élément de verrouillage présente une surface conique antagoniste avec laquelle il est en appui sur la paroi (34) de l'ouverture (30) dans la région du cône.

7. Ensemble selon la revendication 5 ou 6, **caractérisé en ce qu'**il est prévu plusieurs éléments de verrouillage qui sont chacun réalisés en forme de segments de cercle pour verrouiller un tenon (22), les éléments de verrouillage étant précontraints radialement en direction de dégagement par un ressort de dégagement (36) provoquant la force de précontrainte.

8. Ensemble selon l'une des revendications précédentes, **caractérisé en ce qu'**il est prévu un moyen élastique (40) qui, dans la position verrouillée, exerce sur l'élément de verrouillage (24) une force qui est supérieure à la force de précontrainte en direction de dégagement et qui agit à l'encontre de celle-ci.

9. Ensemble selon la revendication 5 ou 6 et additionnellement selon la revendication 8, **caractérisé en ce que** le moyen élastique (40) tend à enfoncer l'élément de verrouillage plus profondément dans le tronçon devenant de plus en plus étroit de l'ouverture (30).

10. Ensemble selon la revendication 8 ou 9, **caractérisé en ce qu'**une partie d'appui (42), sur laquelle s'engage le moyen élastique (40), est logé de manière amovible dans l'ensemble, et après enlèvement de la partie d'appui (42), la force exercée par le moyen élastique (40) sur l'élément de verrouillage (24) en direction de la position verrouillée est inférieure à la force de précontrainte en direction de la position de dégagement.
